# EUROPÄISCHE PATENTSCHRIFT

(11) **EP 3 325 856 B1**
(45) Veröffentlichungstag und Bekanntmachung des Hinweises auf die Patenterteilung: **24.07.2019**
(21) Anmeldenummer: 16751157.5
(22) Anmeldetag: 22.06.2016
(51) Int. Cl.: F16J 9/20

(54) **KOMPRESSIONSKOLBENRING**
COMPRESSION PISTON RING
SEGMENT DE COMPRESSION

(30) Priorität: 24.07.2015 DE 102015009587
(43) Veröffentlichungstag der Anmeldung: 30.05.2018
(73) Patentinhaber: Federal-Mogul Burscheid GmbH, 51399 Burscheid (DE)
(72) Erfinder: SCHULTE-SASSE, Thomas, 42929 Wermelskirchen (DE)
(74) Vertreter: Döpp, Ludger
(86) Internationale Anmeldenummer: PCT/DE2016/100282
(87) Internationale Veröffentlichungsnummer: WO 2017/016537

(56) Entgegenhaltungen:
- EP-A1- 1 413 806
- EP-A1- 2 206 909

## Beschreibung

Die Erfindung betrifft einen Kompressionskolbenring.

Die EP 2 206 909 A1 offenbart eine Kolbenvorrichtung für Verbrennungsmotoren, umfassend einen ersten und einen zweiten Kompressionsring, wobei der zweite Kompressionsring schlitzseitig eine Kerbe aufweist. Die Lauffläche kann hierbei konisch ausgebildet sein.

Durch die EP 1 413 806 A1 ist ein Stahlkolbenring bekannt geworden, beinhaltend eine Lauffläche unterschiedlicher geometrischer Kontur, eine innere Umfangsfläche, eine obere sowie eine untere Flankenfläche. Der gerundet ausgebildete Übergangsbereich von der Lauffläche in die untere Flankenfläche wird mit einer Ausnehmung von etwa quadratförmiger oder gerundeter Kontur versehen.

Allgemein bekannt ist, bei verchromten Kolbenringen obere und untere Kanten an den Laufflächen, respektive Verrundungen, vorzusehen, durch welche Ausbrüche der verschleißfesten Schichten vermieden werden können.

Der Erfindung liegt die Aufgabe zugrunde, einen Kompressionskolbenring bereitzustellen, der eine vorgebbare Laufflächengeometrie aufweist, wobei es unabhängig von der aufgebrachten verschleißfesten Schicht nicht zu Ausbrüchen in den Übergangsbereichen Lauffläche - Flankenflächen kommen soll. Die Einbringung von Kanten an den Laufflächen soll hierbei entbehrlich sein.

Die Aufgabe wird gelöst durch einen Kompressionskolbenring mit einer Lauffläche, einer inneren Umfangsfläche sowie dazwischen verlaufenden oberen und unteren Flankenflächen, wobei im Bereich der unteren Flankenfläche laufflächenseitig eine Schwachminute < 30' mit einer axialen Höhe von 10 - 30 %, bezogen auf die gesamte Laufflächenhöhe, angearbeitet ist, die in eine, in Richtung der oberen Flankenfläche verlaufende, zwischen 90 und 200' betragende Minute übergeht und wobei auf der gesamten Lauffläche eine dünne verschleißfeste Schicht mit einer Dicke zwischen 0,1 und < 20 µm, insbesondere 4 - 6 µm, abgeschieden ist.

Vorteilhafte Weiterbildungen des Erfindungsgegenstandes sind den Unteransprüchen zu entnehmen.

Während die Minute einen Winkel β zwischen 90 und 200' aufweist, hat die Schwachminute einen Winkel α ≤ 20'. Die Schwachminute erstreckt sich vorteilhafterweise über eine axiale Höhe von 10 - 30% der gesamten Lauffläche des Kompressionskolbenrings.

Die Dicke der verschleißfesten (dünnen) Schicht beträgt, einem weiteren Gedanken der Erfindung gemäß, zwischen 0,1 und < 20 µm. Bevorzugte Schichtdicken sind im Bereich zwischen 4 und 6 µm angesiedelt.

An verschleißfesten Schichten können neben Chromschichten auch PVD-, CVD- und/oder DLC-Schichten zum Einsatz gelangen. Sämtlichen Beschichtungsarten ist gemein, dass sie in Dünnschichttechnik erzeugt werden können.

Die an der Lauffläche angeformte Schwachminute im Bereich der unteren Flankenfläche dient einem verbesserten Lichtspaltverhalten.

Die Lauffläche des Kompressionskolbenrings soll bevorzugt mit einer Chromschicht < 10 µm versehen werden.

Wie eingangs angesprochen, bedingen Chromschichten bei ihrer Abscheidung in den Übergangsbereichen der Flankenflächen in die Lauffläche sog. Ausbuchtungen. Um dies auffangen zu können, wurden bisher in diesen Übergangsbereichen in radialer Richtung verlaufende Kanten an den Laufflächen angeformt, in die dann die Chromschicht einläuft.

Da beim Erfindungsgegenstand derartige Kanten nicht mehr notwendig sind, kann hierbei die Gesamthöhe des Kolbenrings noch reduziert werden.

Von weiterem Vorteil ist, dass die Übergangsbereiche obere/untere Flankenfläche - Lauffläche der verschleißfesten Schicht, insbesondere durch Bürsten geringfügig verrundet ausgebildet sind.

Mit dem Erfindungsgegenstand ist es ebenfalls möglich, die Pivot-Punktlage möglichst nahe an der Unterkante der Lauffläche zu positionieren, so dass Ölverbräuche besser kontrolliert werden können.

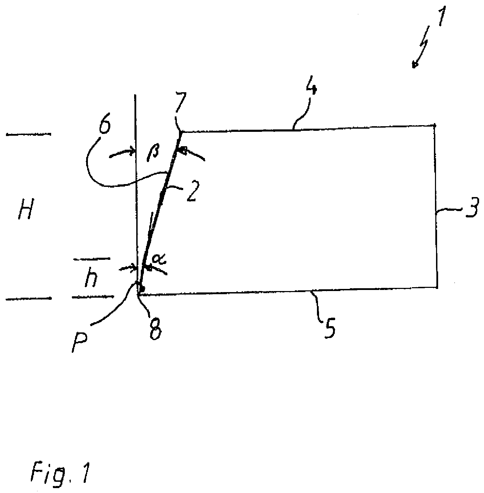

Der Erfindungsgegenstand ist anhand eines Ausführungsbeispiels in der Zeichnung dargestellt und wird wie folgt beschrieben.

Die einzige Figur zeigt einen Kompressionskolbenring 1, mit einer Lauffläche 2, einer inneren Umfangsfläche 3, einer oberen Flankenfläche 4 sowie einer unteren Flankenfläche 5. Die konisch ausgebildete Lauffläche 2 beinhaltet eine, im Bereich der unteren Flanke 4 beginnende Schwachminute a, die in eine, in Richtung der oberen Flankenfläche 3 verlaufende Minute β ausläuft. Der besseren Übersicht halber sind die Minuten α, β überzeichnet dargestellt.

Die Schwachminute α hat eine Höhe h von etwa 15% der Gesamthöhe H des Kompressionskolbenrings 1. Die Schwachminute α dient im Einbauzustand des Kompressionskolbenrings 1 für ein verbessertes Lichtspaltverhalten. Der Kompressionskolbenring 1 soll in diesem Beispiel als Guss- oder Stahlring ausgebildet sein, wobei natürlich auch Stahlguss-Kolbenringe denkbar sind.

Die Schwachminute α soll in diesem Beispiel etwa 20' betragen, während die Minute in diesem Beispiel 150' betragen soll. Die Lauffläche 2 ist über ihre gesamte Höhe H mit einer verschleißfesten Dünnschicht 6 versehen. In diesem Beispiel soll die verschleißfeste Schicht 6 als Chromschicht mit einer Schichtdicke von 8 µm ausgebildet sein. In den Übergangsbereichen 7, 8 einerseits von der oberen Flankenfläche 4 in die Lauffläche 2 und andererseits von der unteren Flankenfläche 5 in die Lauffläche 2 kann bedarfsweise eine Verrundung der verschleißfesten Schicht 6 vorgenommen werden. Dies kann bedarfsweise durch Bürsten oder dergleichen erfolgen.

Mit dem Erfindungsgegenstand wird eine an den jeweiligen Twistwinkel des Kompressionskolbenrings 1 angepasste Laufflächenkonizität erzeugt, so dass eine gleichmäßige Pivot-Punktlage über den gesamten Umfang erreicht wird. Die Pivot-Punktlage steuert entscheidend das Funktionsverhalten eines Kolbenrings im Motor. Bei dem Kompressionskolbenring 1 soll der Pivot-Punkt P laufflächenseitig im Bereich der unteren Flankenfläche 5 vorgesehen sein.

## Patentansprüche

1. Kompressionskolbenring mit einer Lauffläche (2), einer inneren Umfangsfläche (3) sowie dazwischen verlaufenden oberen (4) und unteren Flankenflächen (5), **dadurch gekennzeichnet, dass** im Bereich der unteren Flankenfläche (5) laufflächenseitig eine Schwachminute (a) < 30' mit einer axialen Höhe (h) von 10 - 30 %, bezogen auf die gesamte Laufflächenhöhe (H), angearbeitet ist, die in eine, in Richtung der oberen Flankenfläche (4) verlaufende, zwischen 90 und 200' betragende Minute (β) übergeht und wobei auf der gesamten Lauffläche (2) eine dünne verschleißfeste Schicht (6) mit einer Dicke zwischen 0,1 und < 20 µm, insbesondere 4 - 6 µm, abgeschieden ist.

2. Kompressionskolbenring Anspruch 1, **dadurch gekennzeichnet, dass** die verschleißfeste Schicht (6) als Cr-, PVD-, CVD- und/oder eine DLC-Schicht ausgebildet ist.

3. Kompressionskolbenring nach Anspruch 1 oder 2, **dadurch gekennzeichnet, dass** die Übergangsbereiche (7, 8) der verschleißfesten Schicht (6), der oberen (4)/unteren Flankenfläche (5) in die Lauffläche (2), insbesondere durch Bürsten, verrundet ausgebildet sind.

4. Kompressionskolbenring nach einem der Ansprüche 1 - 3 einsetzbar als zweiter Kompressionsring im Bereich eines Kolbens einer Brennkraftmaschine.

## Claims

1. A compression piston ring comprising a bearing surface (2), an inner peripheral surface (3) as well as upper (4) and lower flank surfaces (5) extending between them, **characterized in that** a weak minute (α) < 30' is attached to the area of the lower flank surface (5) on the side of the bearing surface, wherein the weak minute (a) has an axial height (h) of 10 - 30 % with regard to the entire bearing surface height (H) and merges into a minute (β) comprised between 90 and 200' and extending into the direction of the upper flank surface (4), and wherein a thin wear-resistant layer (6) having a thickness comprised between 0.1 and < 20 µm, in particular between 4 and 6 µm, is applied on the entire bearing surface (2).

2. A compression piston ring according to claim 1, **characterized in that** the wear-resistant layer (6) is formed as a Cr, PVD, CVD and/or DLC layer.

3. A compression piston ring according to claim 1 or claim 2, **characterized in that** the transition areas (7, 8) of the wear-resistant layer (6), of the upper (4)/lower flank surface (5) into the bearing surface (2) are chamfered, in particular by means of brushing.

4. A compression piston ring according to one of the claims 1 through 3, usable as second compression ring in the area of a piston of an internal combustion engine.

## Revendications

1. Segment de piston de compression comprenant une surface de roulement (2), une surface circonférentielle intérieure (3) ainsi que des surfaces de flanc supérieure (4) et inférieure (5), qui s'étendent entre celles-ci, **caractérisé en ce qu'**une minute faible (a) de < 30° est attachée à la zone de la surface de flanc inférieure (5) du côté de la surface de roulement, la minute (a) ayant une hauteur axiale (h) de 10 - 30 % par rapport à la hauteur totale (H) de la surface de roulement et la minute (a) passant dans une minute (β) comprise entre 90 et 200° et s'étendant dans la direction de la surface de flanc supérieure (4), un revêtement fin et résistant à l'usure (6) comprenant une épaisseur comprise entre 0,1 et < 20 µm, notamment entre 4 et 6 µm, étant appliqué sur la surface de roulement entière (2).

2. Segment de piston de compression selon la revendication 1, **caractérisé en ce que** le revêtement résistant à l'usure (6) est formé comme une couche Cr, PVD, CVD et/ou DLC.

3. Segment de piston de compression selon la revendication 1 ou la revendication 2, **caractérisé en ce que** les zones de transition (7, 8) du revêtement résistant à l'usure (6), de la surface de flanc supérieure (4)/inférieure (5) dans la surface de roulement (2), sont arrondies, notamment par moyen de brossage.

4. Segment de piston de compression selon l'une des revendications 1 à 3, utilisable comme bague de compression au niveau d'un piston d'un moteur à combustion interne.
